# FASCICULE DE BREVET EUROPEEN

(11) **EP 4 367 763 B1**
(45) Date de publication et mention de la délivrance du brevet: **25.06.2025**
(21) Numéro de dépôt: 22731271.7
(22) Date de dépôt: 18.05.2022
(51) Int. Cl.: H02G 15/04, B60R 16/02, F16J 15/16, H01B 7/00

(54) **SYSTÈME COMPRENANT UN CÂBLE ET UN MANCHON D'ÉTANCHÉITÉ POUR CE CÂBLE**
SYSTEM MIT EINEM KABEL UND EINER DICHTUNGSMUFFE FÜR DIESES KABEL
SYSTEM COMPRISING A CABLE AND A SEALING SLEEVE FOR THIS CABLE

(30) Priorité: 05.07.2021 FR 2107234
(43) Date de publication de la demande: 15.05.2024
(73) Titulaire: Stellantis Auto SAS, 78300 Poissy (FR)
(72) Inventeur: BALENGHIEN, Olivier, 93390 CLICHY SOUS BOIS (FR); COTTARD, Christophe, 92100 BOULOGNE BILLANCOURT (FR)
(74) Mandataire: PSIP
(86) Numéro de dépôt international: PCT/FR2022/050945
(87) Numéro de publication internationale: WO 2023/281170

(56) Documents cités:
- EP-A2- 2 042 787
- WO-A1-2017/184443
- FR-A1- 2 786 033
- GB-A- 612 213

## Description

La présente invention revendique la priorité de la demande française N°2107234 déposée le 05.07.2021.

L'invention concerne un système comprenant un câble, notamment électrique, un connecteur de ce câble, et un manchon d'étanchéité entre ce câble et le connecteur. Cette invention s'applique avantageusement dans un domaine soumis à des conditions climatiques, notamment dans le domaine automobile.

On connait du document de brevet FR-A1-2786033 un manchon d'étanchéité disposé autour d'un fil, de sorte à augmenter le diamètre du fil pour garantir une étanchéité entre ce fil est un logement dans un connecteur.

Un problème de cette solution est que si le connecteur occupe une position pour laquelle de l'eau au contact du fil ruisselle du fil vers le connecteur, à l'usage et avec les mouvements ou vibrations du fil par rapport au connecteur cette eau s'infiltre entre le manchon et le fil, et entre le logement et le manchon, pour au final atteindre les parties actives du connecteur et créer un risque de court-circuit.

L'état de la technique supplémentaire se trouve dans: GB 612 213 A, EP 2 042 787 A2, WO 2017/184443 A1.

Le but de l'invention est de remédier à ce problème en assurant une étanchéité même si de l'eau ruisselle le long du fil vers le connecteur.

A cet effet, l'invention a pour objet un système comprenant :
- un câble comprenant une âme et une gaine encerclant l'âme, une extrémité de cette âme étant destinée à être raccordée à un connecteur,
- un manchon d'étanchéité encerclant l'âme, comprenant une première extrémité fixée au câble, et une deuxième extrémité, opposée à la première extrémité, destinée à coiffer au moins une partie du connecteur recevant l'âme,
la première extrémité comprenant une bague disposée entre la gaine et l'âme sur une longueur prédéterminée.

Ainsi, la bague crée un effet « tuile de toiture » qui permet d'orienter le câble de sorte que l'eau ruisselle vers le connecteur : cet effet « tuile de toiture » empêche l'eau ne peut pénétrer entre le manchon et la gaine du câble.

Selon un mode de réalisation de l'invention, la bague est en un matériau plus rigide que la gaine.

Ainsi cette bague peut être insérée en force entre la gaine et l'âme, la bague écartant la gaine de l'âme en fur et à mesure de son enfoncement sur la longueur prédéterminée. Cette bague est ainsi précontrainte dans la gaine ce qui a pour effet d'améliorer l'étanchéité tout en maintenant la bague en place par adhérence. En complément, une colle peut être ajoutée.

L'insertion de la bague dans la gaine permet d'avoir un procédé de fabrication du câble très simple : seule une étape finale est rajoutée, insérant la bague dans la gaine, alors que toutes les étapes de filage et/ou extrusion restent inchangées.

Selon un mode de réalisation de l'invention, la gaine est déformée sur toute la longueur prédéterminée par la présence de la bague.

Selon un mode de réalisation de l'invention, cette bague comprend un bord biseauté d'extrémité entre la gaine et l'âme.

Ce bord biseauté permet de faciliter l'insertion de la bague dans la gaine.

Selon un mode de réalisation de l'invention, une normale à ce biseau est orientée vers la gaine.

Ainsi la gaine est écartée de l'âme par la bague.

On notera qu'avantageusement la bague est ajustée à une section transversale de l'âme, de sorte à ne pas abimer l'âme en étant parfaitement guidée par cette dernière lors de l'insertion de la bague dans la gaine, et de sorte à ne pas découper la gaine mais uniquement la déformer par écartement.

Selon un mode de réalisation de l'invention, cette bague comprend un bord tranchant d'extrémité entre la gaine et l'âme.

Selon un mode de réalisation de l'invention, ce système comprend un collier de serrage encerclant la gaine et la bague.

Ce collier a pour avantage de renforcer la liaison entre la bague et la gaine, en augmentant la force d'appui entre la gaine et la bague et donc le frottement.

Selon un mode de réalisation de l'invention, le manchon d'étanchéité comprend la bague et un corps en prolongement de la bague, la bague coiffant le corps, le corps comprenant la deuxième extrémité.

Selon un mode de réalisation de l'invention, ce corps comprenant un matériau plus souple que la bague.

Selon un mode de réalisation de l'invention, la bague et le corps sont réalisés d'une seule pièce.

Selon un mode de réalisation de l'invention, la bague et le corps sont réalisés d'une seule pièce par injection bi-matière.

Selon un mode de réalisation de l'invention, l'âme est constituée d'un matériau électriquement conducteur, et la bague et la gaine d'un matériau électriquement isolant.

L'invention a également pour objet un véhicule automobile comprenant un connecteur, et un système tel que précédemment décrit, l'extrémité de l'âme étant raccordée au connecteur, la deuxième extrémité coiffant au moins la partie du connecteur recevant l'âme.

Selon un mode de réalisation de l'invention, la partie du connecteur recevant l'âme est orientée vers le haut, de sorte qu'un liquide en contact avec la gaine du câble ruisselle par gravité le long du câble jusqu'au connecteur.

D'autres particularités et avantages apparaîtront à la lecture de la description ci-après d'un mode particulier de réalisation, non limitatif de l'invention, faite en référence à l'unique figure dans laquelle :

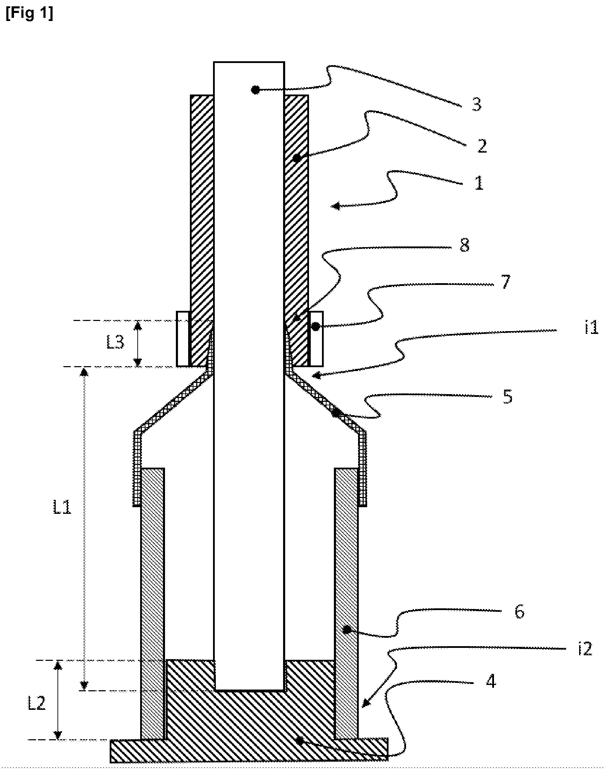

[Fig 1] : représente une vue schématique en coupe d'un système selon l'invention.

La figure 1 divulgue un système selon l'invention comprenant :
- un câble 1 comprenant une âme 3 et une gaine 2 encerclant l'âme 3, une extrémité de cette âme 3 étant destinée à être raccordée à un connecteur 4,
- un manchon d'étanchéité 5, 6 encerclant l'âme 3, comprenant une première extrémité i1 fixée au câble 1, et une deuxième extrémité i2, opposée à la première extrémité i1, destinée à coiffer au moins une partie du connecteur 4 recevant l'âme 3,
la première extrémité i1 comprenant une bague 5 disposée entre la gaine 2 et l'âme 3 sur une longueur prédéterminée L3.

On notera que la deuxième extrémité i2, coiffe au moins une partie du connecteur 4 recevant l'âme 3 sur une deuxième longueur prédéterminée L2. Ce connecteur 4 est adapté en fonction de la technologie du câble 1, la partie du connecteur 4 recevant l'âme 3 étant par exemple une protrusion creuse entourant l'âme 3 et recevant sur sa périphérie la deuxième extrémité i2 du manchon 5, 6.

On notera également que l'âme 3 est dénudée sur une troisième longueur prédéterminée L1, de sorte à ce que l'âme puisse traverser le manchon 5, 6 pour se connecter au connecteur 4, la bague 5 étant disposée à l'extrémité coupée de la gaine 2.

On notera en outre que la figure 1 illustre un encerclage de l'âme 3 par le manchon 5, 6, ce manchon 5, 6 n'étant jamais en contact avec l'âme 3. Ceci a pour effet de créer une lame d'air autour de l'âme 3 favorisant par exemple une isolation électrique et/ou thermique, mais ce n'est pas nécessaire et le manchon 5, 6 peut être partiellement ou totalement en contact avec l'âme 3.

On notera que la section transversale de l'âme est avantageusement circulaire, mais pas nécessairement : Cette âme 3 peut être constituée d'un unique fil massif de section circulaire ou trapézoïdale, d'une tresse, de plusieurs fils torsadés ou parallèles.

Ce câble 1 est par exemple un câble électrique, notamment un câble d'un véhicule à propulsion électrique comprenant une batterie de traction et une machine motrice électrique alimentée par cette batterie, le câble 1 étant connecté à la batterie par le connecteur 4. Ce câble 1 travaille par exemple à un potentiel entre 350 et 600V. Mais cette invention d'applique à d'autre types de câble, par exemple des câbles optiques, ou de réseau de communication, ou encore des câbles électriques domestiques.

La bague 5 est par exemple en un matériau plus rigide que la gaine 2. Par exemple, la bague 5 est en polychlorure de vinyle, alors que la gaine 2 est en polyéthylène, mais d'autres matières plastiques isolantes sont envisageables.

La gaine 2 est déformée sur toute la longueur prédéterminée L3 par la présence de la bague 5.

Cette bague 5 comprend un bord biseauté d'extrémité entre la gaine 2 et l'âme 3.

En variante ou en complément, cette bague 5 comprend un bord tranchant d'extrémité entre la gaine 2 et l'âme 3.

Si cette bague 5 est insérée en force dans la gaine 2, on notera que plus la longueur prédéterminée L3 est grande, plus la tenue de la bague 5 dans la gaine 2 est grande. Cependant, si la section du câble 1 est circulaire, on notera avantageusement une longueur prédéterminée L3 de 0,5 à 1,5 fois le diamètre de la gaine 2, de sorte à ce que la mise en place de la bague 5 soit aisée. On notera la même caractéristique pour la deuxième longueur prédéterminée L2.

En option, un collier de serrage 7 encercle la gaine 2 et la bague 5.

Par exemple, le manchon d'étanchéité 5, 6 comprend la bague 5 et un corps 6 en prolongement de la bague 5, la bague 5 coiffant le corps 6, le corps 6 comprenant la deuxième extrémité i2. Ce corps 6 est alors emboîté dans la bague 5 et est maintenu dans cet emboitement par collage et/ou par un ajustement serré entre la bague 5 et le corps 6. Mais d'autres possibilité d'assemblage sont envisagées, comme par exemple un assemblage vissé entre la bague 5 et le corps 6.

Ce corps 6 est réalisé par exemple d'une seule pièce, notamment par injection bi-matière si le corps 6 est en une matière plus souple que la bague 5.

Le câble est par exemple un câble électrique, et l'âme 3 est constituée d'un matériau électriquement conducteur, et la bague 5 et la gaine 2 d'un matériau électriquement isolant.

Cette invention s'applique avantageusement à un véhicule automobile comprenant le connecteur 4 et un système tel que précédemment décrit, l'extrémité de l'âme 3 étant raccordée au connecteur 4, la deuxième extrémité i2 coiffant au moins la partie du connecteur 4 recevant l'âme 3.

## Revendications

1. Système comprenant :
- un câble (1) comprenant une âme (3) et une gaine (2) encerclant l'âme (3), une extrémité de cette âme (3) étant destinée à être raccordée à un connecteur (4),
- un manchon d'étanchéité (5, 6) encerclant l'âme (3), comprenant une première extrémité (i1) fixée au câble (1), et une deuxième extrémité (i2), opposée à la première extrémité (i1), destinée à coiffer au moins une partie du connecteur (4) recevant l'âme (3),
**caractérisé en ce que** la première extrémité (i1) comprend une bague (5) disposée entre la gaine (2) et l'âme (3) sur une longueur prédéterminée (L3).

2. Système selon la revendication 1, la bague (5) étant en un matériau plus rigide que la gaine (2).

3. Système selon l'une des revendications précédentes, la gaine (2) étant déformée sur toute la longueur prédéterminée (L3) par la présence de la bague (5).

4. Système selon l'une des revendications précédentes, cette bague (5) comprenant un bord biseauté d'extrémité entre la gaine (2) et l'âme (3).

5. Système selon l'une des revendications précédentes, cette bague (5) comprenant un bord tranchant d'extrémité entre la gaine (2) et l'âme (3).

6. Système selon l'une des revendications précédentes, comprenant un collier de serrage (7) encerclant la gaine (2) et la bague (5).

7. Système selon l'une des revendications précédentes, le manchon d'étanchéité (5, 6) comprenant la bague (5) et un corps (6) en prolongement de la bague (5), la bague (5) coiffant le corps (6), le corps (6) comprenant la deuxième extrémité (i2).

8. Système selon la revendication 6, la bague (5) et le corps (6) étant réalisés d'une seule pièce.

9. Système selon l'une des revendications précédentes, l'âme (3) étant constituée d'un matériau électriquement conducteur, et la bague (5) et la gaine (2) d'un matériau électriquement isolant.

10. Véhicule automobile comprenant un connecteur (4) et un système selon l'une des revendications précédentes, l'extrémité de l'âme (3) étant raccordée au connecteur (4), la deuxième extrémité (i2) coiffant au moins la partie du connecteur (4) recevant l'âme (3).

## Patentansprüche

1. System, umfassend:
- ein Kabel (1) mit einem Kern (3) und einem den Kern (3) umgebenden Mantel (2), wobei ein Ende dieses Kerns (3) zum Anschluss an einen Verbinder (4) bestimmt ist,
- eine den Kern (3) umgebende Dichtungshülse (5, 6) mit einem am Kabel (1) befestigten ersten Ende (i1) und einem dem ersten Ende (i1) gegenüberliegenden zweiten Ende (i2), das zumindest einen Teil des den Kern (3) aufnehmenden Verbinders (4) abdecken soll, **dadurch gekennzeichnet, dass** das erste Ende (i1) einen Ring (5) umfasst, der zwischen dem Mantel (2) und dem Kern (3) über eine vorgegebene Länge (L3) angeordnet ist.

2. System nach Anspruch 1, wobei der Ring (5) aus einem steiferen Material besteht als die Hülle (2).

3. System nach einem der vorhergehenden Ansprüche, wobei die Hülle (2) durch das Vorhandensein des Rings (5) über die gesamte vorgegebene Länge (L3) verformt wird.

4. System nach einem der vorhergehenden Ansprüche, wobei dieser Ring (5) eine abgeschrägte Endkante zwischen der Hülle (2) und dem Kern (3) aufweist.

5. System nach einem der vorhergehenden Ansprüche, wobei dieser Ring (5) zwischen der Hülle (2) und dem Kern (3) eine scharfe Endkante aufweist.

6. System nach einem der vorhergehenden Ansprüche, umfassend eine Klemmmanschette (7), die die Hülle (2) und den Ring (5) umschließt.

7. System nach einem der vorhergehenden Ansprüche, wobei die Dichtungshülse (5, 6) den Ring (5) und einen den Ring (5) verlängernden Körper (6) umfasst, wobei der Ring (5) den Körper (6) bedeckt, wobei der Körper (6) das zweite Ende (i2) umfasst.

8. System nach Anspruch 6, wobei der Ring (5) und der Körper (6) aus einem einzigen Stück gefertigt sind.

9. System nach einem der vorhergehenden Ansprüche, wobei der Kern (3) aus einem elektrisch leitfähigen Material und der Ring (5) und die Hülle (2) aus einem elektrisch isolierenden Material bestehen.

10. Kraftfahrzeug, umfassend einen Verbinder (4) und ein System nach einem der vorhergehenden Ansprüche, wobei das Ende des Kerns (3) mit dem Verbinder (4) verbunden ist und das zweite Ende (i2) zumindest den Teil des Verbinders (4) abdeckt, der den Kern (3) aufnimmt.

## Claims

1. System comprising:
- a cable (1) comprising a core (3) and a sheath (2) encircling the core (3), one end of this core (3) being intended to be connected to a connector (4),
- a sealing sleeve (5, 6) encircling the core (3), comprising a first end (i1) fixed to the cable (1), and a second end (i2), opposite the first end (i1), intended to cover at least part of the connector (4) receiving the core (3),
**characterized in that** the first end (i1) comprises a ring (5) arranged between the sheath (2) and the core (3) over a predetermined length (L3).

2. System according to claim 1, the ring (5) being made of a more rigid material than the sheath (2).

3. System according to one of the preceding claims, the sheath (2) being deformed over the entire predetermined length (L3) by the presence of the ring (5).

4. System according to one of the preceding claims, this ring (5) comprising a beveled end edge between the sheath (2) and the core (3).

5. System according to one of the preceding claims, this ring (5) comprising a sharp end edge between the sheath (2) and the core (3).

6. System according to one of the preceding claims, comprising a clamping collar (7) encircling the sheath (2) and the ring (5).

7. System according to one of the preceding claims, the sealing sleeve (5, 6) comprising the ring (5) and a body (6) extending the ring (5), the ring (5) covering the body (6), the body (6) comprising the second end (i2).

8. System according to claim 6, the ring (5) and the body (6) being made from a single piece.

9. System according to one of the preceding claims, the core (3) being made of an electrically conductive material, and the ring (5) and the sheath (2) of an electrically insulating material.

10. Motor vehicle comprising a connector (4) and a system according to one of the preceding claims, the end of the core (3) being connected to the connector (4), the second end (i2) covering at least the part of the connector (4) receiving the core (3).
